# EUROPÄISCHE PATENTSCHRIFT

(11) **EP 4 344 773 B1**
(45) Veröffentlichungstag und Bekanntmachung des Hinweises auf die Patenterteilung: **15.07.2026**
(21) Anmeldenummer: 22199163.1
(22) Anmeldetag: 30.09.2022
(51) Int. Cl.: B01J 23/46, C01B 21/00

(54) **KATALYSATORSYSTEM MIT EINEM KATALYSATORNETZ UMFASSEND EINEN EDELMETALLDRAHT FÜR LANGE KAMPAGNEN IN DER AMMONIAKOXIDATION**
CATALYST SYSTEM COMPRISING A CATALYST NETWORK COMPRISING A NOBLE METAL WIRE FOR LONG CAMPAIGNS IN AMMONIA OXIDATION
SYSTÈME CATALYTIQUE COMPRENANT UN RÉSEAU CATALYTIQUE COMPRENANT UN FIL DE MÉTAL NOBLE POUR GRANDES CAMPAGNES DANS L'OXYDATION D'AMMONIAC

(43) Veröffentlichungstag der Anmeldung: 03.04.2024
(73) Patentinhaber: Heraeus Precious Metals GmbH & Co. KG, 63450 Hanau (DE)
(72) Erfinder: Hesse, Jens, 63450 Hanau (DE); Maier, Dirk, 63450 Hanau (DE); Hirschel, Pascal, 63450 Hanau (DE); Jantsch, Uwe, 63450 Hanau (DE)
(74) Vertreter: Heraeus IP

(56) Entgegenhaltungen:
- EP-A1- 3 680 015

## Beschreibung

Die vorliegende Erfindung betrifft ein Katalysatorsystem, das mehr als ein Katalysatornetz umfasst, wobei mindestens eines der Katalysatornetze mindestens einen Edelmetalldraht enthält, der aus einer binären PtRh-Legierung besteht. Die binäre PtRh-Legierung besteht aus 3,4 - 4,6 Gew.-% Rhodium, Verunreinigungen und Rest Platin. Das Katalysatorsystem umfasst kein Katalysatornetz, das einen Edelmetalldraht aus einer weiteren binären PtRh-Legierung mit mehr als 6.5 Gew.-% Rhodium enthält. Die Erfindung betrifft außerdem ein Verfahren zur katalytischen Oxidation von Ammoniak, bei dem ein erfindungsgemäßes Katalysatorsystem verwendet wird.

Katalysatorsysteme mit Katalysatornetzen werden insbesondere in Strömungsreaktoren für Gasreaktionen verwendet. Sie werden beispielsweise bei der Herstellung von Blausäure nach dem Andrussow-Verfahren oder bei der Herstellung von Salpetersäure nach dem Ostwald-Verfahren eingesetzt. Geeignete Katalysatoren müssen eine große katalytisch aktive Oberfläche bereitstellen. In der Regel werden daher Katalysatornetze in Form von räumlichen, gasdurchlässigen Strukturen aus Edelmetalldrähten verwendet. Auch Auffangsysteme zur Rückgewinnung von verdampften katalytisch aktiven Bestandteilen basieren häufig auf solchen netzförmigen Strukturen. Es werden zweckmäßigerweise meist mehrere Netze hintereinander angeordnet und zu einem Katalysatorsystem zusammengefasst. Die Katalysatorsysteme bestehen aus 2 bis 50 übereinanderliegenden Katalysatornetzen, wobei diese Anzahl im Wesentlichen von den Bedingungen im Reaktor, beispielsweise dem Betriebsdruck und der Massen-Durchflussmenge der Gase abhängt. Der Durchmesser der Netze erreicht in bestimmten Brennern bis zu 6 m.

Die Katalysatornetze bestehen meist aus ein- oder mehrlagigen Netzen in Form von Gestricken, Gewirken und/oder Geweben. Die einzelnen Netze werden aus feinen Edelmetalldrähten hergestellt, die überwiegend Platin (Pt), Palladium (Pd), Rhodium (Rh) oder Legierungen dieser Metalle enthalten. Die Wahl des Materials des Edelmetalldrahtes wird unter anderem durch die Position und Funktion des Katalysatornetzes im Katalysatorsystem bestimmt. Vor allem Auffang-Netze können neben Edelmetallen auch weitere Bestandteile wie beispielsweise Nickel enthalten. Der Edelmetalleinsatz ist teuer und wird so gering wie möglich gehalten. Andererseits nimmt die "katalytische Effizienz", die eine wichtige Kenngröße und ein Maß für den Umsatz der Edukte und damit der Ausbeute ist, in der Regel mit steigendem Edelmetall-Anteil bis zu einem maximalen Anteil zu. Der Einsatz von binären PtRh-Legierungen bei der katalytischen Oxidation von Ammoniak mit 2 bis 50 Gew.-% (Gewichtsprozent) Rhodiumanteil ist bekannt, beispielsweise aus der US 1706055 A.

Betreiber von Ammoniakoxidationsanlagen definieren für eine geplante Kampagne die Menge Ammoniak, die sie zur Verfügung stellen in Abhängigkeit von einer Mindestmenge an Stickstoffmonoxid, die produziert werden soll. Es hat sich in der Industrie etabliert, dass zur Auslegung eines Netzkatalysators für die Ammoniakoxidation auf die Referenzgröße der katalytischen Effizienz verwiesen wird, worunter die eingesetzte Menge Ammoniak je Tag und je Quadratmeter Querschnittsfläche des Reaktors verstanden wird. Üblicherweise wird zur Auslegung eines Katalysatorsystems nur die Anfangseffizienz eines Katalysators berücksichtigt. Infolge von Oxidation und Sublimation verlieren die Katalysatornetze im Einsatz Edelmetall und damit Effizienz, so dass sie nach einer gewissen Gebrauchsdauer ausgetauscht werden müssen.

Als geeigneter Kompromiss hinsichtlich Standzeit, katalytischer Effizienz und Edelmetalleinsatz hat sich die PtRh5-Legierung erwiesen, die sich als industrieller Standard für den Einsatz in Mitteldruckanlagen durchgesetzt hat, wie beispielsweise in der EP 1284927 A1 beschrieben. Industrie-übliche Legierungen sind daneben PtRh8 und PtRh10; in speziellen Fällen, vor allem bei höheren Betriebsdrücken kommt auch PtRh3 zum Einsatz.

Zur Optimierung der Katalysatoreffizienz werden häufig unterschiedliche binäre PtRh-Legierungen miteinander kombiniert. Die EP 3680015 A1 offenbart beispielsweise Katalysatorsysteme aus mindestens zwei Netzlagen, bei denen unterschiedliche binäre PtRh-Legierungen zum Einsatz kommen, deren Rhodiumgehalt in Strömungsrichtung abnimmt. Aufgrund eines relativ hohen Anteils von mehr als 7 Gew.-% Rhodium in mindestens einer der Netzlagen ist der Rhodiumgehalt des Gesamtsystems zudem insgesamt hoch.

Insbesondere bei Reaktoren, die länger im Einsatz sind hat sich jedoch überraschenderweise gezeigt, dass die Verwendung einer binären Platinlegierung mit einem Rhodiumanteil zwischen den industrieüblichen von 3 bzw. 5 Gew.-% eine unerwartete Steigerung des erreichbaren Gesamtumsatzes des Katalysatorsystems zur Folge hat. Die Verwendung solcher Legierungen hat sich außerdem als vorteilhaft für eine längere Gesamtlaufzeit und die während dieser Laufzeit erreichbare mittlere Effizienz gezeigt. Im betroffenen Technologiegebiet macht 1 Gewichtsprozent Unterschied im Rhodiumanteil außerdem einen signifikanten Unterschied für die Kosten der Netze und Katalysatorsysteme aus.

Die Aufgabe der Erfindung bestand daher darin, ein für lange Kampagnenlängen in der Ammoniakoxidation optimiertes Katalysatorsystem bereitzustellen. Insbesondere war es Teil der Aufgabe, ein Katalysatorsystem bereitzustellen, das eine maximale Gesamt-Produktausbeute ermöglicht. Weiterhin war es Aufgabe, ein Katalysatorsystem bereitzustellen, das einen für diesen Zweck optimierten Rhodiumanteil aufweist.

Die Aufgabe wird gelöst durch ein Katalysatorsystem umfassend mehr als ein Katalysatornetz, wobei mindestens eines der Katalysatornetze mindestens einen Edelmetalldraht enthält, der aus einer binären PtRh-Legierung besteht, dadurch gekennzeichnet, dass die binäre PtRh-Legierung des mindestens einen Edelmetalldrahts aus 3,4 - 4,6 Gew.-% Rhodium, Verunreinigungen und Rest Platin besteht und dass das Katalysatorsystem kein Katalysatornetz, enthaltend einen Edelmetalldraht aus einer weiteren binären PtRh-Legierung mit mehr als 6.5 Gew.-% Rhodium, umfasst.

Die Erfindung stellt weiterhin ein Verfahren für den Einsatz eines solchen Katalysatornetzes bereit.

Überraschend hat sich gezeigt, dass die mittlere Effizienz eines erfindungsgemäßen Katalysatorsystems unerwartet höher ist als bei Systemen, die die industrieübliche Legierung PtRh3 enthalten und vergleichbar mit Systemen mit dem ebenfalls industrieüblichen rhodiumreicheren PtRh5. Unter der mittleren Effizienz ist hierbei die durchschnittliche Effizienz des Katalysatorsystems über die mögliche Gesamtlaufzeit vor einem notwendigen Austausch zu verstehen. Ein Austausch wird notwendig, wenn das Katalysatorsystem aufgrund von Korrosionsphänomenen instabil wird oder die Katalysatoreffizienz unter einen bestimmten Wert sinkt, üblicherweise liegt dieser im Druckbereich von 4 bis 6 bar bei 94 %.

Die vorliegende Erfindung betrifft ein Katalysatorsystem für einen Strömungsreaktor. In Strömungsreaktoren werden typischerweise Katalysatoren in Form von gasdurchlässigen Flächengebilden in die Reaktionszone in einer Ebene senkrecht zur Strömungsrichtung des Frischgases eingebaut. Solche gasdurchlässigen Flächengebilde werden meist in Form von Katalysatornetzen eingesetzt. Unter einem Katalysatorsystem wird ein Ensemble von solchen Katalysatornetzen verstanden.

Das Katalysatorsystem umfasst mehr als ein Katalysatornetz. Unter einem Katalysatornetz wird ein ein- oder mehrlagiges gasdurchlässiges Flächengebilde verstanden. Die Flächenbildung der Katalysatornetze wird bevorzugt durch maschenförmiges Verschlingen eines oder mehrerer Edelmetalldrähte erreicht. Katalysatornetze können beispielsweise durch Weben, Wirken oder Stricken eines Edelmetalldrahts oder mehrerer Edelmetalldrähte hergestellt werden. Die Struktur der Katalysatornetze kann dabei gezielt durch die Verwendung unterschiedlicher Web-, Wirk- oder Strickmuster und/oder unterschiedliche Maschenweiten eingestellt werden. Die Katalysatornetze des Katalysatorsystems können unabhängig voneinander gewebt, gewirkt oder gestrickt sein.

In bevorzugten Ausführungsformen kann das Katalysatornetz eine dreidimensionale Struktur aufweisen. Im Rahmen dieser Anmeldung werden Netze als flache, zweidimensionale Gegenstände verstanden. Unter einer dreidimensionalen Struktur ist zu verstehen, dass das Katalysatornetz neben seiner planaren, zweidimensionalen Ausdehnung auch eine Erstreckung in die dritte Raumdimension aufweist. Katalysatornetze mit dreidimensionaler Struktur weisen eine größere freie Oberfläche und verbesserte Stofftransportbedingungen zwischen Gas und Oberfläche auf, was sich vorteilhaft auf die katalytische Effektivität auswirkt und den Druckabfall im Strömungsreaktor verringern kann. Eine dreidimensionale Struktur kann durch die Verwendung mindestens eines Edelmetalldrahtes mit zwei- oder dreidimensionaler Struktur oder durch die Strukturierung des Katalysatornetzes erhalten werden. Dreidimensionale Strukturen des Katalysatornetzes können beispielsweise wellenförmig oder beulenförmig sein. Zur Erzeugung solcher Strukturen kann ein zunächst planares Katalysatornetz einem Verfahrensschritt unterzogen werden, bei dem eine dreidimensionale Struktur eingeprägt wird oder durch Faltung erzeugt wird.

Das Flächengewicht der Katalysatornetze ist nicht weiter beschränkt und kann beispielsweise im Bereich von 100 bis 950 g/m² liegen, insbesondere im Bereich von 150 bis 900 g/m². Das Flächengewicht eines Katalysatornetzes wird unter anderem durch den verwendeten Edelmetalldraht bzw. die verwendeten Edelmetalldrähte und das verwendete Wirk-, Strick-, oder Webmuster, insbesondere durch die jeweilige Maschenweite, beeinflusst.

Die Katalysatornetze enthalten jeweils mindestens einen Edelmetalldraht. Unter einem Edelmetalldraht wird ein Draht verstanden, der aus Edelmetall oder einer Edelmetalllegierung besteht. Unter einer Edelmetalllegierung wird eine Legierung verstanden, die mehr als 50 Gew.-% Edelmetall enthält. Dass eine Legierung zu mehr als 50 Gew.-% aus Edelmetall besteht, bedeutet, dass der Gewichtsanteil des Edelmetalls mindestens 50 Gew.-% des Gewichts der gesamten Legierung ausmacht.

Vorzugsweise wird ein Edelmetalldraht eingesetzt, der einen Durchmesser von 40 - 150 µm aufweist, bevorzugt 50 - 130 µm, insbesondere 60 - 120 µm.

Der Edelmetalldraht oder die Edelmetalldrähte können als Runddraht, das heißt mit einem runden Querschnitt, ausgebildet sein. In einer anderen Ausführung können der Edelmetalldraht oder die Edelmetalldrähte als abgeflachter Runddraht oder als Draht mit einem anderen Querschnitt ausgeführt werden.

Der Edelmetalldraht oder die Edelmetalldrähte können eine zwei- oder dreidimensionale Struktur aufweisen. Der Edelmetalldraht oder die Edelmetalldrähte können beispielsweise einen oder mehrere wellenförmige, treppenförmige oder helixförmig ausgebildete Längenabschnitte umfassen oder als über die gesamte Länge als wellenförmiger, treppenförmiger oder helixförmig gebogener Draht ausgebildet sein. Falls der Edelmetalldraht oder die Edelmetalldrähte einen helixförmig ausgebildeten Längenabschnitt aufweisen, ist über die Anzahl der Windungen der helixförmigen Längenabschnitte sowohl die aktive Katalysatoroberfläche eines Katalysatornetzes als auch die Masse des Katalysatornetzes bezogen auf eine Oberflächeneinheit einstellbar. Bei Verwendung eines Edelmetalldrahts mit zwei- oder dreidimensionaler Struktur weist ein daraus hergestelltes Katalysatornetz eine dreidimensionale Struktur auf.

Der Edelmetalldraht oder die Edelmetalldrähte können mehrere Drähte, die in diesem Fall auch als Filamente bezeichnet werden, umfassen. In solchen Fällen können der Edelmetalldraht oder die Edelmetalldrähte eine erhöhte Festigkeit aufweisen, was die Langzeitstabilität des Katalysatornetzes verbessert. Die Filamente können miteinander verdrillt sein, in diesen Fällen weist der Edelmetalldraht oder die Edelmetalldrähte eine seilartige Struktur auf. Vorteilhaft kann auch sein, wenn der Edelmetalldraht oder die Edelmetalldrähte mindestens ein Filament umfasst, das helixförmig um mindestens ein weiteres Filament gewickelt ist.

Mindestens eines der Katalysatornetze enthält mindestens eine Edelmetalldraht bestehend aus einer binären PtRh-Legierung. Unter einer binären Legierung, auch Zweistofflegierung genannt, wird eine Legierung verstanden, die neben Verunreinigungen nur 2 Legierungselemente enthält.

Die gewünschte Optimierung der mittleren Effizienz für eine möglichst lange Maximallaufzeit setzt einen vergleichsweise engen Bereich der Zusammensetzung der binären PtRh-Legierung voraus. Die binäre PtRh-Legierung besteht aus 3,4 - 4,6 Gew.-% Rhodium, Verunreinigungen und Rest Platin. Bevorzugt besteht die binäre PtRh-Legierung zu 3,6 - 4,4 Gew.-% aus Rhodium, besonders bevorzugt zu 3,8 - 4,2 Gew.-%, beispielsweise kann die binäre PtRh-Legierung zu 3,6 - 4,0 Gew.-% aus Rhodium bestehen.

Es sei an dieser Stelle darauf hingewiesen, dass sich die Ausführungen zur Zusammensetzung des Edelmetalldrahtes oder der Edelmetalldrähte auf den Zustand vor dem Einsatz in einer Reaktoranlage beziehen. Mit anderen Worten wird damit der "frische" Edelmetalldraht bezeichnet. Während des Einsatzes ändert sich wie oben erläutert die Zusammensetzung des Edelmetalldrahtes, beispielsweise durch das Verdampfen von Platinanteilen.

Unter Verunreinigungen der binären PtRh-Legierung sind übliche Verunreinigungen zu verstehen, die beabsichtigt in die binäre PtRh-Legierung gelangt sind oder die unvermeidbar im Zuge des Darstellungsprozesses in die Ausgangsmaterialien gelangt sind beziehungsweise nicht mit vertretbarem Aufwand (vollständig) aus den Rohstoffen entfernt werden konnten. Der Anteil der Verunreinigungen beträgt bevorzugt in der Summe maximal 1 Gew.-% der beschriebenen binären PtRh-Legierung, bevorzugt maximal 0,5 Gew.-%.

Das mindestens eine Katalysatornetz kann vollständig aus dem mindestens einen Edelmetalldraht der binären PtRh-Legierung bestehen, es kann aber auch weitere Bestandteile umfassen, beispielsweise weitere Edelmetalldrähte oder Drähte aus Nicht-Edelmetallen.

In vielen Fällen kann es vorteilhaft sein, wenn das Katalysatornetz mindestens einen weiteren Edelmetalldraht umfasst, es also aus zwei oder mehr Edelmetalldrähten gebildet wird. Die mindestens zwei Edelmetalldrähte können den gleichen oder unterschiedliche Durchmesser und/oder die gleiche oder unterschiedliche Struktur aufweisen.

Das Edelmetall des weiteren Edelmetalldrahtes ist vorzugsweise aus der Gruppe ausgewählt, die aus Platinmetallen, Gold und Silber und deren Kombinationen besteht. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen.

Das Katalysatorsystem umfasst mehr als ein Katalysatornetz, mit anderen Worten umfasst das Katalysatorsystem mindestens zwei Katalysatornetze. Die mindestens zwei Katalysatornetze können gleich oder unterschiedlich sein. Je nach vorgesehener Verwendung des Katalysatorsystems und Reaktionsbedingungen im Strömungsreaktor können Katalysatornetze unterschiedlicher oder gleicher Struktur und unterschiedlicher oder gleicher Edelmetalldrähte miteinander kombiniert werden.

Das Katalysatorsystem umfasst kein Katalysatornetz, das einen Edelmetalldraht aus einer weiteren binären PtRh-Legierung mit mehr als 6.5 Gew.-% Rhodium enthält. Verwendete binäre PtRh-Legierungen bestehen zu nicht mehr als 6.5 Gew.-% aus Rhodium, Verunreinigungen und Rest Platin. Der Anteil der Verunreinigungen der weiteren binären PtRh-Legierung beträgt bevorzugt in der Summe maximal 1 Gew.-%, insbesondere maximal 0,5 Gew.-%.

Die Verwendung von keiner binären PtRh-Legierung mit einem höheren Rhodiumanteil erlaubt eine besonders kosteneffiziente Ausführung des Katalysatorsystems und hat sich des Weiteren als vorteilhaft für die mittlere Effizienz gezeigt. Das Katalysatorsystem kann jedoch weitere Katalysatornetze mit einem Edelmetalldraht aus einer binären PtRh-Legierung mit weniger als 7 Gew.-% Rhodium umfassen, beispielsweise aus PtRh6.

Besonders vorteilhaft umfasst das Katalysatorsystem kein Katalysatornetz, das einen Edelmetalldraht aus einer weiteren binären PtRh-Legierung mit mehr als 6 Gew.-% Rhodium enthält.

Es kann besonders bevorzugt sein, dass das Katalysatorsystem kein weiteres Katalysatornetz umfasst, das einen Edelmetalldraht aus einer anderen binären PtRh-Legierung enthält.

Das Katalysatorsystem kann eine oder mehrere Katalysatornetz-Gruppen umfassen. Unter einer Katalysatornetz-Gruppe wird ein Ensemble von Katalysatornetzen verstanden, die aus mindestens einem Edelmetalldraht der gleichen Zusammensetzung gebildet werden. Typischerweise umfasst eine Katalysatornetzgruppe mehr als ein Katalysatornetz.

Die Flächengewichte der Katalysatornetze innerhalb einer Katalysatornetzgruppe können gleich oder unterschiedlich sein. Es hat sich als vorteilhaft erwiesen, wenn die Katalysatornetze einer Katalysatornetz-Gruppe über das gleiche Flächengewicht verfügen. Die Flächengewichte der Katalysatornetze der Katalysatornetzgruppen können in Strömungsrichtung gleichbleiben, abnehmen oder zunehmen.

Beispielsweise kann das Katalysatorsystem mindestens 3 Katalysatornetze umfassend einen Edelmetalldraht aus der binären PtRh-Legierung mit 3,4 - 4,6 Gew.-% Rhodium umfassen, noch bevorzugter mindestens 5. Bevorzugt sind mindestens 50 % der Katalysatornetze des Katalysatorsystems Katalysatornetze umfassend einen Edelmetalldraht aus der binären PtRh-Legierung mit 3,4 - 4,6 Gew.-% Rhodium.

Typischerweise kann ein Katalysatorsystem mindestens ein Katalysatornetz oder eine Katalysatornetzgruppe enthalten, die einen Edelmetalldraht aus einer Palladiumlegierung enthält. Bevorzugt ist dieses Katalysatornetz oder diese Katalysatornetzgruppe in Strömungsrichtung hinten angeordnet. Solche Katalysatornetze können als Catchment-Netze fungieren, also verdampftes Platin aus einer in Strömungsrichtung weiter vorne angeordneten Katalysatornetzgruppe auffangen.

Unter einer Palladiumlegierung wird eine Legierung verstanden, die zu mehr als 50 Gew.-% aus Palladium besteht. Die Palladiumlegierung kann zwischen 50 und 97 Gew.-% Palladium enthalten, bevorzugt mehr als 60 Gew.-% Palladium, insbesondere bevorzugt mehr als 70 Gew.-% Palladium. Die Palladiumlegierung kann eine ternäre Palladiumlegierung, neben Verunreinigungen bestehend aus Palladium, Platin und Rhodium, oder eine binäre Palladiumlegierung die neben Verunreinigungen aus Palladium und Nickel, Wolfram, Platin oder Gold besteht, sein. Der Anteil der Verunreinigungen beträgt in der Summe maximal 1 Gew.-% der Palladiumlegierung, bevorzugt maximal 0,5 Gew.-%. Beispielsweise kann die Palladiumlegierung des Edelmetalldrahts neben Verunreinigungen aus 70 - 97 Gew.-% Palladium, aus 0 - 10 % Gew.-% Rhodium und zu 3 - 30 Gew.-% aus Nickel, Wolfram, Platin oder Gold bestehen. Der Edelmetalldraht kann beispielsweise eine PdPt(3-30)Rh(1-10)-Legierung, PdNi(3-30)-Legierung, eine PdW(3-30)-Legierung, eine PdPt(3-30)-Legierung oder eine PdAu(3-30)-Legierung umfassen. PdM(a-b) bedeutet hierbei beispielsweise, dass die Legierung das Metall M mit einem Gewichtsanteil im Bereich von a bis b Gewichts-% enthält und der restliche Anteil der (100 - (a bis b)) Gewichts-% bis auf Verunreinigungen aus Palladium besteht.

Beispielsweise kann das Katalysatorsystem mindestens 3 Katalysatornetze, enthaltend einen Edelmetalldraht aus der binären PtRh-Legierung mit 3,4 - 4,6 Gew.-% Rhodium und mindestens 1 Katalysatornetz, enthaltend einen Edelmetalldraht aus einer Palladiumlegierung, umfassen. Insbesondere kann das Katalysatorsystem mindestens 3 Katalysatornetze, enthaltend einen Edelmetalldraht aus der binären PtRh-Legierung mit 3,4 - 4,6 Gew.-% Rhodium und mindestens 2 Katalysatornetze, enthaltend einen Edelmetalldraht aus einer Palladiumlegierung, umfassen.

Das Katalysatorsystem kann auch weitere Komponenten umfassen.

Das Katalysatorsystem kann beispielsweise als erstes Katalysatornetz oder als erste Katalysatornetzgruppe eine Zündlage umfassen. Eine Zündlage umfasst einen Edelmetalldraht, der nur Platin und Verunreinigungen enthält.

Es kann insbesondere vorteilhaft sein, dass das in Strömungsrichtung gesehen vorderste Katalysatornetz aus einem Edelmetalldraht besteht, der neben Verunreinigungen nur Platin und keine weiteren Komponenten enthält.

In bevorzugten Ausführungsformen kann das Katalysatorsystem Trennelemente umfassen, beispielsweise in Form von Zwischennetzen. Solche Trennelemente können eingesetzt werden, um einer Kompression und/oder Verschmelzung oder Versinterung benachbarter Katalysatornetze oder Katalysatornetz-Gruppen unter Druckbelastung entgegenzuwirken. Das oder die Trennelement(e) verfügt oder verfügen vorzugsweise über eine im Vergleich zu den Katalysatornetzen eingeschränkte Flexibilität.

Als Trennelemente eignen sich beispielsweise Elemente oder Netze aus einem hitzebeständigen Stahl, typischerweise einer FeCrAl-Legierung wie Megapyr oder Kanthal, aus Edelstahl oder aus hitzebeständigen Legierungen wie beispielsweise Nickel-Chrom-Legierungen. Das oder die Trennelement(e) kann oder können außerdem eine katalytisch aktive Beschichtung umfassend mindestens ein Edelmetall aufweisen.

Das erfindungsgemäße Katalysatorsystem ist besonders zur Herstellung von Salpetersäure nach dem Ostwald-Verfahren geeignet. Dabei wird das Katalysatorsystem zur katalytischen Ammoniakverbrennung von einem Ammoniak-Sauerstoff-Gemisch durchströmt.

Die vorliegende Erfindung betrifft außerdem ein Verfahren zur katalytischen Oxidation von Ammoniak, bei dem ein Ammoniak enthaltendes Frischgas über ein erfindungsgemäßes Katalysatorsystem geleitet wird. Für bevorzugte Ausführungsformen des Katalysatorsystems sei auf die vorangegangenen Ausführungen verwiesen.

Bevorzugt liegt der Ammoniakgehalt des Frischgases zwischen 9 und 12 Vol.-%.

Der Druck des Frischgases beträgt bevorzugterweise zwischen 1 und 14 bar, insbesondere zwischen 3 und 10 bar. Die Katalysatornetztemperatur liegt bevorzugt im Bereich von 600 bis 1100 °C, bevorzugt im Bereich von 700 bis 1000 °C.

Bevorzugterweise wird das Frischgas mit einem Durchsatz im Bereich von 3 bis 90 tN/m²d über ein Katalysatorsystem gemäß der vorliegenden Erfindung geleitet. Die Abkürzung "tN/m²d" steht dabei für "Tonnen Stickstoff (aus Ammoniak) pro Tag und pro normierter effektiver Querschnittsfläche des Katalysatorsystems von einem Quadratmeter.

Nachfolgend wird die Erfindung anhand von Zeichnungen und einem Versuch zur katalytischen Gesamteffizienz erläutert.

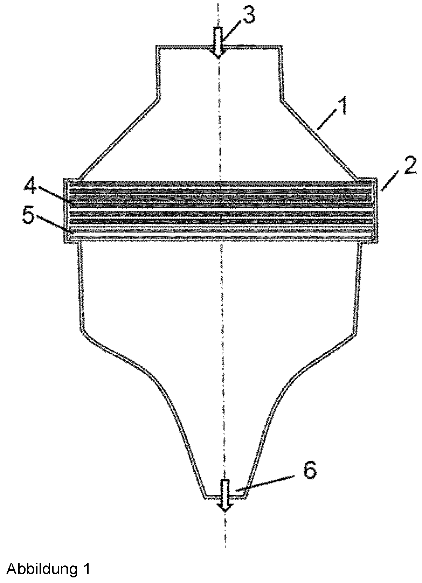

Abbildung 1 zeigt schematisch einen senkrecht positionierten Strömungsreaktor 1 zur heterogenkatalytischen Oxidation von Ammoniak. Das Katalysatorsystem 2 bildet die eigentliche Reaktionszone des Strömungsreaktors 1. Das Katalysatorsystem 2 umfasst mehrere, in Strömungsrichtung 3 des Frischgases hintereinander angeordnete Katalysatornetze 4, hinter denen mehrere Catchment-Netze 5 angeordnet sein können. Der effektive Katalysatornetz-Durchmesser kann bis zu 6 m betragen. Die eingesetzten Netze sind jeweils textile Flächengebilde, die durch maschinelles Weben, Wirken oder Stricken von Edelmetalldrähten hergestellt werden.

Das Frischgas ist ein Ammoniak-Luftgemisch, das auf eine Vorheiztemperatur erwärmt und unter erhöhtem Druck von oben in den Reaktor 1 eingeleitet wird. Beim Eintritt in das Katalysatorsystem 2 erfolgen eine Zündung des Gasgemischs und eine anschließende exotherme Verbrennungsreaktion. Dabei findet folgende Hauptreaktion statt:

4 NH₃ + 5 O₂ → 4 NO + 6 H₂O

Dabei wird Ammoniak (NH₃) zu Stickstoffmonoxid (NO) und Wasser (H₂O) umgesetzt. Das gebildete Stickstoffmonoxid (NO) reagiert im abströmenden Reaktionsgasgemisch (symbolisiert durch den die Strömungsrichtung des abströmenden Reaktionsgasgemischs anzeigenden Richtungspfeil 6) mit überschüssigem Sauerstoff zu Stickstoffdioxid (NO₂), das mit Wasser in einer nachgeschalteten Absorptionsanlage zu Salpetersäure (HNO₃) umgesetzt wird.

In einem Testreaktor gemäß Abbildung 1 wurden drei Katalysatorsysteme verglichen, die jeweils 5 Katalysatornetze aus einer binären PtRh-Legierung und zusätzlich 6 Catchment-Netze aus einer PdNi5-Legierung umfassten. Der erfindungsgemäße Testreaktor (EB) enthielt PtRh4-Netze, die Vergleichsreaktoren PtRh3- (VB1) bzw. PtRh5-Netze (VB2). Die Katalysatornetze wurden durch maschinelles Wirken eines Edelmetalldrahtes mit einem Durchmesser von 76 µm aus der jeweiligen Legierung hergestellt. Die Gewebestruktur war für alle Netze gleich und bezog sich auf ein Flächengewicht für PtRh5 von 600g/m².

Die Testreaktoren wurden bei den folgenden, jeweils gleichen Testbedingungen betrieben.

| | |
|---|---|
| Druck: | 5 bar (absolut) |
| Durchsatz: | 12 t/m²d N (12 Tonnen Stickstoff (aus Ammoniak) pro Tag und effektiver Querschnittsfläche der Katalysatorpackung in Quadratmeter |
| NH₃-Anteil: | 10,7 Vol.-% im Frischgas |
| Vorheiztemp.: | 175 °C (Temperatur des NH₃/Luft Gemisches), woraus sich eine Netztemperatur von 890 °C ergibt. |

Die Entwicklung der durchschnittlichen täglichen Katalysatoreffizienz des jeweiligen Katalysatorsystems (Ausbeute an NO in %) wurde so lange bestimmt, bis die Effizienz unter einen vorher festgelegten Schwellwert von 94 % sank oder das Katalysatorpaket zu instabil für einen weiteren Betrieb des Reaktors wurde.

Tabelle 1 stellt die durchschnittliche Effizienz der Katalysatorsysteme am ersten Betriebstag (d1) gegenüber, die eine lineare Abhängigkeit vom Rh-Anteil des jeweiligen Katalysatorsystems zeigt. Außerdem zeigt die Tabelle die bestimmten maximalen Laufzeiten und die über diese Zeit gemessene mittlere Effizienz der Testsysteme.

**Tabelle1:**

| | Effizienz an d1 [%] | Max. Laufzeit [d] | Mittlere Effizienz [%] |
|---|---|---|---|
| VB1 (PtRh3) | 94,5 | 330 | 95,3 |
| EB (PtRh4) | 95,1 | 335 | 95,7 |
| VB2 (PtRh5) | 95,5 | 285 | 95,7 |

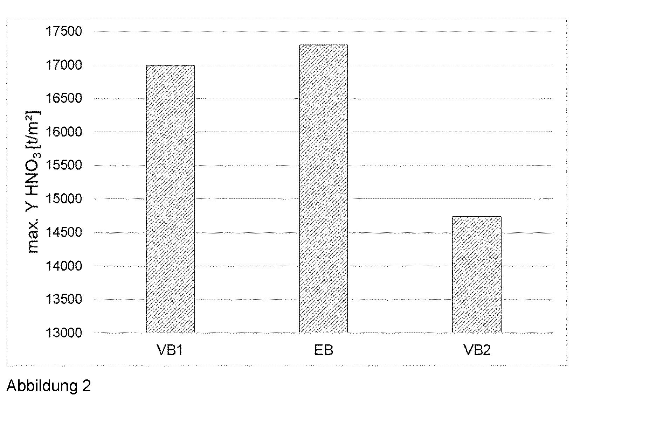

Abbildung 2 stellt die über den jeweiligen Zeitraum erhaltene Gesamtausbeute an HNO₃ (max. Y) normiert auf die Fläche der Katalysatorsysteme gegenüber. Hier wird überraschenderweise ein Maximum beim erfindungsgemäßen System mit einem mittleren Rh-Gehalt beobachtet (EB mit PtRh4 als binäre PtRh-Legierung), das in der Industrie üblicherweise nicht verwendet wird.

Mit dem erfindungsgemäßen Reaktorsystem konnte gegenüber dem System mit niedrigerem Rh-Gehalt (VB1) eine über die maximal erreichbare Laufzeit um ca. 0,4 % erhöhte durchschnittliche Effizienz beobachtet werden. In Kombination mit einer länger möglichen Kampagnendauer bedeutet diese durchschnittliche Steigerung einen bedeutenden wirtschaftlichen Vorteil. Gegenüber dem System mit höherem Rh-Gehalt (VB2) war die durchschnittliche Effizienz vergleichbar. Jedoch bietet das erfindungsgemäße System durch die längere Maximallaufzeit, die erhöhte Gesamtausbeute und den niedrigeren Anteil am preisbestimmenden Rhodium ebenfalls einen signifikanten wirtschaftliche Verbesserung gegenüber dem Standardsystem.

## Patentansprüche

1. Katalysatorsystem zur katalytischen Oxidation von Ammoniak, umfassend mehr als ein Katalysatornetz, wobei mindestens eines der Katalysatornetze mindestens einen Edelmetalldraht enthält, der aus einer binären PtRh-Legierung besteht,
**dadurch gekennzeichnet, dass** die binäre PtRh-Legierung des mindestens einen Edelmetalldrahts aus 3,4 - 4,6 Gew.-% Rhodium, Verunreinigungen und Rest Platin besteht
und dass das Katalysatorsystem kein Katalysatornetz enthaltend einen Edelmetalldraht aus einer weiteren binären PtRh-Legierung mit mehr als 6,5 Gew.-% Rhodium umfasst.

2. Katalysatorsystem gemäß Anspruch 1, wobei die Katalysatornetze unabhängig voneinander gewebt, gewirkt oder gestrickt sind.

3. Katalysatorsystem gemäß Anspruch 1 oder 2, wobei das Katalysatorsystem mindestens 3 Katalysatornetze, enthaltend einen Edelmetalldraht aus der binären PtRh-Legierung mit 3,4 - 4,6 Gew.-% Rhodium, umfasst.

4. Katalysatorsystem gemäß einem der vorangegangenen Ansprüche, wobei das Katalysatorsystem mehrere Katalysatornetz-Gruppen umfasst.

5. Katalysatorsystem gemäß einem der vorangegangenen Ansprüche, wobei mindestens eines der Katalysatornetze eine dreidimensionale Struktur aufweist.

6. Katalysatorsystem gemäß einem der vorangegangenen Ansprüche, wobei die Edelmetalldrähte der Katalysatornetze einen Durchmesser von 40 - 150 µm aufweisen.

7. Katalysatorsystem gemäß einem der vorangegangenen Ansprüche, wobei der Anteil der Verunreinigungen der binären PtRh-Legierung maximal 1 Gew.-% beträgt.

8. Katalysatorsystem gemäß einem der vorangegangenen Ansprüche, wobei die binäre PtRh-Legierung des mindestens einen Edelmetalldrahts aus 3,6 - 4,4 Gew.-% Rhodium, Verunreinigungen und Rest Platin besteht.

9. Katalysatorsystem gemäß einem der vorangegangenen Ansprüche, wobei das Katalysatorsystem kein Katalysatornetz, enthaltend einen Edelmetalldraht aus einer weiteren binären PtRh-Legierung mit mehr als 6 Gew.-% Rhodium, umfasst.

10. Katalysatorsystem gemäß einem der vorangegangenen Ansprüche, wobei das Katalysatorsystem kein weiteres Katalysatornetz, enthaltend einen Edelmetalldraht aus einer anderen binären PtRh-Legierung, umfasst.

11. Katalysatorsystem gemäß einem der vorangegangenen Ansprüche, wobei das Katalysatorsystem mindestens 1 Katalysatornetz, enthaltend einen Edelmetalldraht aus einer Palladiumlegierung, umfasst.

12. Katalysatorsystem gemäß einem der vorangegangenen Ansprüche, wobei das Katalysatorsystem mindestens ein Trennelement umfasst.

13. Verfahren zur katalytischen Oxidation von Ammoniak, bei dem ein Ammoniak enthaltendes Frischgas über ein Katalysatorsystem gemäß einem der Ansprüche 1 bis Anspruch 12 geleitet wird.

## Claims

1. A catalyst system for the catalytic oxidation of ammonia, comprising more than one catalyst network, wherein at least one of the catalyst networks contains at least one noble metal wire consisting of a binary PtRh alloy,
**characterized in that** the binary PtRh alloy of the at least one noble metal wire consists of 3.4 - 4.6 wt.% of rhodium, impurities and the remainder platinum,
and **in that** the catalyst system does not comprise a catalyst network containing a noble metal wire made of a further binary PtRh alloy comprising more than 6.5 wt.% of rhodium.

2. The catalyst system according to claim 1, wherein the catalyst networks are woven, knitted or braided independently of one another.

3. The catalyst system according to claim 1 or 2, wherein the catalyst system comprises at least 3 catalyst networks containing a noble metal wire made of the binary PtRh alloy comprising 3.4 - 4.6 wt.% of rhodium.

4. The catalyst system according to any of the preceding claims, wherein the catalyst system comprises a plurality of catalyst network groups.

5. The catalyst system according to any of the preceding claims, wherein at least one of the catalyst networks comprises a three-dimensional structure.

6. The catalyst system according to any of the preceding claims, wherein the noble metal wires of the catalyst networks have a diameter of 40 - 150 µm.

7. The catalyst system according to any of the preceding claims, wherein the proportion of the impurities in the binary PtRh alloy is no more than 1 wt.%.

8. The catalyst system according to any of the preceding claims, wherein the binary PtRh alloy of the at least one noble metal wire consists of 3.6 - 4.4 wt.% of rhodium, impurities and the remainder platinum.

9. The catalyst system according to any of the preceding claims, wherein the catalyst system does not comprise a catalyst network containing a noble metal wire made of a further binary PtRh alloy comprising more than 6 wt.% of rhodium.

10. The catalyst system according to any of the preceding claims, wherein the catalyst system does not comprise any further catalyst network containing a noble metal wire made of another binary PtRh alloy.

11. The catalyst system according to any of the preceding claims, wherein the catalyst system comprises at least 1 catalyst network containing a noble metal wire made of a palladium alloy.

12. The catalyst system according to any of the preceding claims, wherein the catalyst system comprises at least one separating element.

13. A method for the catalytic oxidation of ammonia, in which a fresh gas containing ammonia is conducted via a catalyst system according to any of claims 1 to 12.

## Revendications

1. Système catalytique pour l'oxydation catalytique de l'ammoniac, comprenant plus d'une grille catalytique, dans lequel au moins l'une des grilles catalytiques contient au moins un fil de métal précieux constitué d'un alliage binaire PtRh,
**caractérisé en ce que** l'alliage binaire PtRh de l'au moins un fil de métal précieux est constitué de 3,4 à 4,6 % en poids de rhodium, d'impuretés et le reste étant du platine
et **en ce que** le système catalytique ne comprend pas de grille catalytique contenant un fil de métal précieux en un autre alliage binaire PtRh comportant plus de 6,5 % en poids de rhodium.

2. Système catalytique selon la revendication 1, dans lequel les grilles catalytiques sont tissées, tricotées ou maillées indépendamment les unes des autres.

3. Système catalytique selon la revendication 1 ou 2, dans lequel le système catalytique comprend au moins trois grilles catalytiques contenant un fil de métal précieux en alliage binaire PtRh comportant 3,4 à 4,6 % en poids de rhodium.

4. Système catalytique selon l'une des revendications précédentes, dans lequel le système catalytique comprend plusieurs groupes de grilles catalytiques.

5. Système catalytique selon l'une des revendications précédentes, dans lequel au moins l'une des grilles catalytiques présente une structure tridimensionnelle.

6. Système catalytique selon l'une des revendications précédentes, dans lequel les fils de métal précieux des grilles catalytiques présentent un diamètre allant de 40 à 150 µm.

7. Système catalytique selon l'une des revendications précédentes, dans lequel la proportion d'impuretés de l'alliage binaire PtRh est de 1 % en poids au maximum.

8. Système catalytique selon l'une des revendications précédentes, dans lequel l'alliage binaire PtRh de l'au moins un fil de métal précieux est constitué de 3,6 à 4,4 % en poids de rhodium, d'impuretés et le reste étant du platine.

9. Système catalytique selon l'une des revendications précédentes, dans lequel le système catalytique ne comprend pas de grille catalytique contenant un fil de métal précieux en un autre alliage binaire PtRh comportant plus de 6 % en poids de rhodium.

10. Système catalytique selon l'une des revendications précédentes, dans lequel le système catalytique ne comprend pas d'autre grille catalytique contenant un fil de métal précieux en un autre alliage binaire PtRh.

11. Système catalytique selon l'une des revendications précédentes, dans lequel le système catalytique comprend au moins une grille catalytique contenant un fil de métal précieux en un alliage de palladium.

12. Système catalytique selon l'une des revendications précédentes, dans lequel le système catalytique comprend au moins un élément de séparation.

13. Procédé pour l'oxydation catalytique de l'ammoniac, dans lequel un gaz frais contenant de l'ammoniac est guidé par l'intermédiaire d'un système catalytique selon l'une des revendications 1 à 12.
